(19) Europäisches Patentamt / European Patent Office / Office européen des brevets

(11) **EP 3 211 250 A1**

(12) **EUROPEAN PATENT APPLICATION**

(43) Date of publication:
30.08.2017 Bulletin 2017/35

(51) Int Cl.:
*F15B 21/08* (2006.01)          *E02F 9/22* (2006.01)
*A01B 63/10* (2006.01)          *G05D 7/00* (2006.01)

(21) Application number: 17152847.4

(22) Date of filing: 24.01.2017

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 18.02.2016 EP 16290038

(71) Applicant: AGCO International GmbH
8212 Neuhausen am Rheinfall (CH)

(72) Inventor: Boulard, Nicolas
60026 Beauvais (FR)

(74) Representative: AGCO Intellectual Property
Department
AGCO Limited
Abbey Park Stoneleigh
Kenilworth, Warwickshire CV8 2TQ (GB)

(54) **A SYSTEM AND METHOD FOR HYDRAULIC FLOW CONTROL**

(57)     There is described an agricultural system for hydraulic flow control. In a system having an adjustable hydraulic fluid valve arranged between a hydraulic reservoir and a hydraulic consumer, pressure is measured at the reservoir-facing side and at the consumer-facing side of the valve, from which the fluid flow through the valve can be determined. The valve can then be easily controlled to provide a desired fluid flow level, regardless of the type of hydraulic circuit used.

Fig. 2

## Description

### Field of the Invention

The present invention relates to a control method and an associated system for hydraulic flow control in a vehicle, in particular for the supply of hydraulic fluid for agricultural implements for agricultural vehicles.

### Background of the Invention

Agricultural vehicles are often provided with various implements or tools to perform different tasks and operations, e.g. cultivation, ploughing, seeding, spraying, etc. Such implements are usually supplied using hydraulic fluid provided from a hydraulic tank or reservoir located in the vehicle itself.

The supply of hydraulic fluid can be controlled by adjustment of a flow valve, such as a spool valve, provided in the flow path between the hydraulic tank and the implement. Prior art systems require the user to input a percentage value to control the valve operation, to control the valve duty cycle.

However, this places additional burden on the user, as the user has to calculate the particular duty cycle of the fluid valve which results in the desired fluid flow to the implement. In addition, the presence of different types of hydraulic circuits, e.g. a Load Sensing circuit or an Open Centre circuit, can lead to further complications in calculations, due to differing hydraulic pump RPMs producing different rates of fluid flow from the tank or reservoir.

It is an object of the invention to provide a control method and system for hitch-mounted implements which addresses the above problems, and provides a simpler solution for the use of hitch-mounted implements.

### Summary of the Invention

Accordingly, there is provided an agricultural system comprising:

> an agricultural vehicle, preferably an agricultural tractor, having a hydraulic fluid tank;
> a hydraulically-operated agricultural implement coupled to the agricultural vehicle;
> an adjustable fluid valve connecting the hydraulic fluid tank with the agricultural implement;
> a first fluid pressure sensor located at the tank-facing side of the fluid valve;
> a second fluid pressure sensor located at the implement-facing side of the fluid valve; and
> a controller coupled with the fluid valve and the first and second pressure sensors, the controller operable to adjust the fluid valve such that the flow rate to the implement is maintained at a desired flow rate, and wherein the controller is operable to determine the actual flow rate of hydraulic fluid through the fluid valve based on the output of the first and second pressure sensors.

By measuring the pressure difference across the adjustable valve, the fluid flow through the valve can be calculated. Accordingly, the controller can adjust the valve to ensure that the fluid flow through the valve is maintained at a desired flow level, regardless of the hydraulic circuit used to generate the initial fluid flow.

Preferably, the adjustable fluid valve is a spool valve, and wherein the controller is operable to adjust the duty cycle of the spool valve.

Preferably, the hydraulic fluid tank is provided as part of a hydraulic circuit of the agricultural vehicle. The hydraulic circuit comprises a hydraulic pump

In one aspect, the hydraulic circuit comprises a Load Sensing hydraulic circuit. Alternatively, the hydraulic circuit comprises an Open Centre hydraulic circuit.

Preferably, the agricultural system further comprises an input device coupled with said controller, wherein a desired flow rate of hydraulic fluid through the fluid valve to the implement can be defined using said input device.

The input device may be any suitable user-operated interface, e.g. a keyboard with an associated display, a touchscreen device, etc.

Additionally or alternatively, said agricultural implement is provided with an implement identifier, wherein the controller is operable to adjust the fluid valve based at least in part on said implement identifier.

The system may be configured to determine the type of implement that is coupled with the vehicle, e.g. a hitch-mounted implement, such that the system operation can be tailored to the particular requirements of the implement. For instance, the implement identifier may provide a default flow rate for hydraulic fluid flow to the implement, wherein the controller can adjust the fluid valve to provide such default flow rate to the implement.

Preferably, said implement identifier comprises a machine-readable element, arranged to be accessed by the controller. The implement identifier may comprise a network-accessible memory element connected to the controller via a communications link, e.g. via an ISOBUS communications link. Additionally or alternatively, the implement identifier may comprise an optically-readable element, e.g. a 2D barcode or QR-code; or a wireless communication device, e.g. an RFID tag.

Preferably, the agricultural vehicle comprises an adjustable hitch, wherein the implement is a hitch-mounted implement, and wherein the controller is operable to adjust the fluid valve to control the fluid flow rate based on the position of the adjustable hitch.

Preferably, the controller is operable to determine if the hitch is in a raised or in a lowered position, wherein the fluid flow rate is controlled based on the position of the hitch and the hitch-mounted implement. The system may comprise sensors to determine the position of the hitch.

In a preferred embodiment, the controller is arranged to control the fluid valve to turn off fluid flow to the implement when the hitch is in a raised position.

Preferably, the vehicle comprises a releasable fluid connection through which the hydraulic tank is connected with the implement, wherein the second fluid pressure sensor is positioned to measure the fluid pressure between the adjustable fluid valve and the releasable connection.

Preferably, the controller is arranged to calculate the required valve opening size such that:

$$S = \frac{F}{V * \sqrt{(P1 - P2)}}$$

Wherein:

S = Fluid valve aperture size;
F = Desired flow rate;
V = Fluid viscosity;
P1 = Fluid pressure at tank-facing side of fluid valve; and
P2 = Fluid pressure at implement-facing side of fluid valve.

There is further provided a method of controlling the flow of hydraulic fluid between a hydraulic fluid tank and an agricultural implement through an adjustable fluid valve, the method comprising the steps of:

receiving a desired fluid flow rate for an agricultural implement;
measuring a first fluid pressure at the hydraulic tank-facing side of a fluid valve;
measuring a second fluid pressure at the implement-facing side of the fluid valve;
based on the first and second measured fluid pressures, determining the actual flow rate of hydraulic fluid through the fluid valve; and
adjusting the fluid valve such that the actual flow rate equals the desired flow rate.

There is further provided a controller for an agricultural vehicle, the controller arranged to implement the steps of the above method.

Preferably, the step of adjusting the fluid valve comprises adjusting the duty cycle of the fluid valve.

In one aspect, the step of receiving a desired fluid flow rate comprises providing an input device to a user, and receiving a user-defined fluid flow rate via said input device.

**Detailed Description of the Invention**

Embodiments of the invention will now be described, by way of example only, with reference to the accompanying drawings, in which:

Fig. 1 is an illustration of an agricultural vehicle having a hitch-mounted implement according to an embodiment of the invention, and
Fig. 2 is an illustrative schematic of a control system according to the invention.

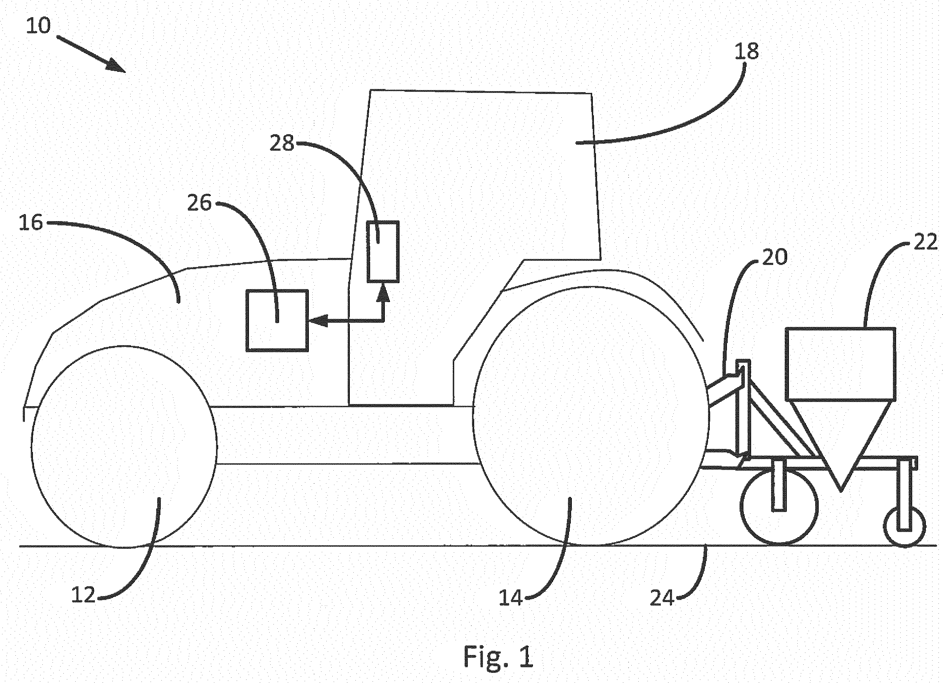

In Fig. 1, a vehicle in the form of an agricultural tractor is indicated at 10. The tractor 10 comprises front wheels 12, rear wheels 14, an engine section 16 and a cab section 18. The tractor 10 further comprises a rear hitch 20 which may be raised or lowered relative to the rest of the tractor 10. An agricultural implement, in this case a pneumatic seeder 22, can be provided mounted to the hitch 20, such that lowering or raising of the hitch 20 brings the hitch-mounted implement 22 into or out of engagement with the ground 24. The tractor 10 further comprises at least one Electronic Control Unit (ECU) 26, which is arranged to control operation of various tractor systems. The cab section 18 is provided with operator controls 28 for control of the different components of the tractor 10, including the direct control of the height of the hitch 20. The operator controls 28 may comprise mechanical levers and/or electronic control systems incorporating configurable switches, touchscreen displays, etc. It will be understood that the ECU 26 is provided in communication with the operator controls 28.

The implement 22 acts as a hydraulic consumer, in that a supply of hydraulic fluid is needed for implement operation. It will be understood that the tractor 10 further comprises a hydraulic circuit including a hydraulic supply, which can be releasably connected with the implement 22.

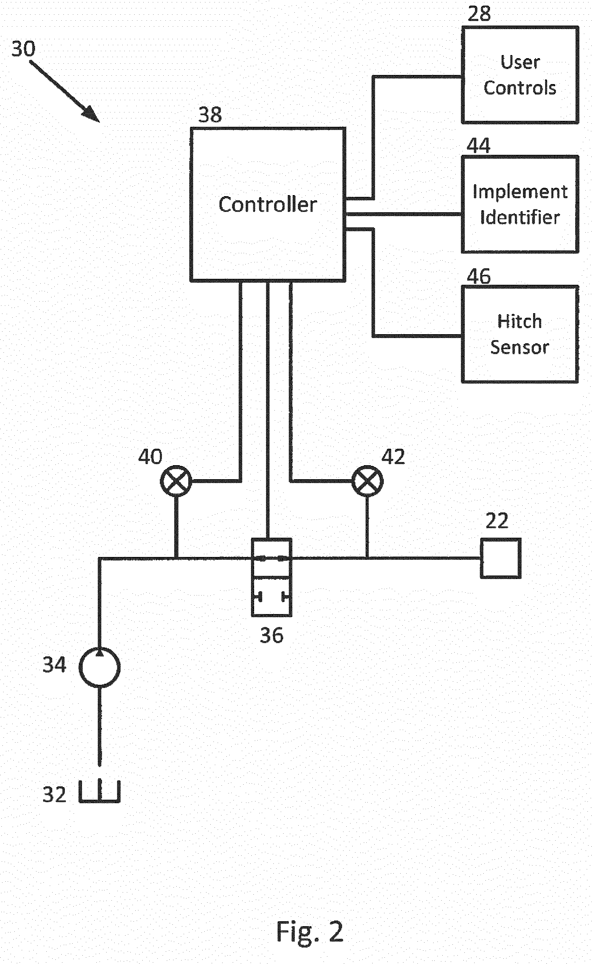

With reference to the schematic illustration of Fig. 2, a system according to the invention is indicated generally at 30. The tractor 10 comprises a hydraulic tank or reservoir 32 coupled with a pump 34. The tank 32 and pump 34 are coupled to the hitch-mounted implement 22 through an adjustable fluid valve 36, such as a spool valve. It will be understood that the tank 32 and pump 34 may be coupled with additional hydraulic circuits or devices, which are not shown in Fig. 2.

The system 30 further comprises a controller 38 which is coupled with the adjustable valve 36 to control the flow of hydraulic fluid between the tank 32 and pump 34 and the implement 22. The controller 38 may be provided as part of the ECU 26 or as a separate controller element, e.g. as part of a retrofit solution.

First and second fluid pressure sensors 40,42 are provided as part of the system 30, the pressure sensors 40,42 communicatively coupled with the controller 38. The first pressure sensor 40 is positioned at the tank-facing side of the fluid valve 36, and is arranged to monitor the fluid pressure entering the valve 36 from the tank 32 and pump 34. The second pressure sensor 42 is positioned at the implement-facing side of the fluid valve 36, and is arranged to monitor the fluid pressure going from the valve 36 to the implement 22.

Based on the monitored pressure levels, the controller 38 is able to determine the fluid flow level through the valve 36. The operation of the valve 36 can then be controlled to adjust the fluid flow level to a desired level of flow for the hydraulic consumer in the form of the implement 22. For instances where the valve 36 is a spool valve or similar, the controller 38 is operable to adjust the duty cycle of the valve 36 to produce the desired flow level through the valve 36.

The desired flow level of fluid may be a user-definable value, which a user may input using the operator controls 28.

Additionally or alternatively, the desired flow level of fluid may be provided based on an implement identifier 44. In such a case, the control system 30 may be operable to receive data defining the particular implement 22 provided on the tractor 10, which may then determine particular preferred variables of the control system 30, e.g. the preferred or default hydraulic fluid flow required for the implement 22 to operate. For example, the implement 22 may be provided with an RFID tag or other suitable identifier 44 which may be accessed and read by the controller 38, or accessed by an alternative tractor ECU 26 and stored in a suitable readable memory device (not shown) which may be accessed and read by the controller 38. Additionally, the vehicle operator may be able to define the type of implement 22 provided through use of the operator input controls 28, such data subsequently stored in memory accessible by the controller 38.

In a further aspect, the control system 30 may be provided with suitable sensors 46 to determine the status of the tractor hitch 20, e.g. whether the hitch 20 is in a raised or lowered position. The controller 38 can then be configured to regulate the hydraulic fluid flow to the implement 22, based on the configuration of the hitch 20.

For example, if the hitch 20 is raised, this may be indicative of when the hitch 20 and attached implement 22 are configured for transport mode, in which hydraulic fluid is not required by the implement. Accordingly, the controller 38 may be configured to reduce or shut off hydraulic flow through the valve 36 when the hitch 20 is in the raised position. Similarly, when the hitch sensor 46 indicates that the hitch 20 is lowered, or transitions from a raised to a lowered position, this may be indicative of when the hitch 20 and attached implement 22 are prepared for operation. At this point, the controller 38 may be configured to regulate the fluid valve 36 to provide the desired fluid flow level through the valve 36 when the hitch 20 is in the lowered position.

Preferably, the controller is arranged to calculate the required valve opening size such that:

$$S = \frac{F}{V * \sqrt{(P1 - P2)}}$$

Wherein:

S = Fluid valve aperture size;
F = Desired flow rate;
V = Fluid viscosity;
P1 = Fluid pressure at tank-facing side of fluid valve; and
P2 = Fluid pressure at implement-facing side of fluid valve.

The viscosity of the hydraulic fluid may be predefined by the controller 38, or may be a user-definable setting.

The system and method of the invention provides a simpler and more efficient mechanism for tractor operators to control hydraulic flow in agricultural systems. In addition, the system and method of the invention provides for a high degree of flexibility and customisability of vehicle operation, when providing for hydraulic fluid control for tractor implements.

The invention is not limited to the embodiments described herein, and may be modified or adapted without departing from the scope of the present invention.

**Claims**

1. An agricultural system comprising:

   an agricultural vehicle, preferably an agricultural tractor, having a hydraulic fluid tank;
   a hydraulically-operated agricultural implement coupled to the agricultural vehicle;
   an adjustable fluid valve connecting the hydraulic fluid tank with the agricultural implement;
   a first fluid pressure sensor located at the tank-facing side of the fluid valve;
   a second fluid pressure sensor located at the implement-facing side of the fluid valve; and
   a controller coupled with the fluid valve and the first and second pressure sensors, the controller operable to adjust the fluid valve such that the flow rate to the implement is maintained at a desired flow rate, and wherein the controller is operable to determine the actual flow rate of hydraulic fluid through the fluid valve based on the output of the first and second pressure sensors.

2. The system of claim 1, wherein the adjustable fluid valve is a spool valve, and wherein the controller is operable to adjust the duty cycle of the spool valve.

3. The system of claim 1 or claim 2, wherein the hydraulic fluid tank is provided as part of a hydraulic circuit of the agricultural vehicle.

4. The system of claim 3, wherein the hydraulic circuit comprises a Load Sensing hydraulic circuit or an Open Centre hydraulic circuit.

**5.** The system of any preceding claim, wherein the agricultural system further comprises an input device coupled with said controller, wherein a desired flow rate of hydraulic fluid through the fluid valve to the implement can be defined using said input device.

**6.** The system of any preceding claim, wherein said agricultural implement is provided with an implement identifier, wherein the controller is operable to adjust the fluid valve based at least in part on said implement identifier.

**7.** The system of claim 6, wherein said implement identifier comprises a machine-readable element, arranged to be accessed by the controller.

**8.** The system of any preceding claim, wherein the agricultural vehicle comprises an adjustable hitch, wherein the implement is a hitch-mounted implement, and wherein the controller is operable to adjust the fluid valve to control the fluid flow rate based on the position of the adjustable hitch.

**9.** The system of claim 8, wherein the controller is operable to determine if the hitch is in a raised or in a lowered position, wherein the fluid flow rate is controlled based on the position of the hitch and the hitch-mounted implement.

**10.** The system of claim 9, wherein the controller is arranged to control the fluid valve to turn off fluid flow to the implement when the hitch is in a raised position.

**11.** The system of any preceding claim, wherein the vehicle comprises a releasable fluid connection through which the hydraulic tank is connected with the implement, wherein the second fluid pressure sensor is positioned to measure the fluid pressure between the adjustable fluid valve and the releasable connection.

**12.** The system of any preceding claim, wherein the controller is arranged to calculate the required valve opening size such that:

$$S = \frac{F}{V * \sqrt{(P1 - P2)}}$$

Wherein:

S = Fluid valve aperture size;
F = Desired flow rate;
V = Fluid viscosity;
P1 = Fluid pressure at tank-facing side of fluid valve; and

P2 = Fluid pressure at implement-facing side of fluid valve.

**13.** A method of controlling the flow of hydraulic fluid between a hydraulic fluid tank and an agricultural implement through an adjustable fluid valve, the method comprising the steps of:

receiving a desired fluid flow rate for an agricultural implement;
measuring a first fluid pressure at the hydraulic tank-facing side of a fluid valve;
measuring a second fluid pressure at the implement-facing side of the fluid valve;
based on the first and second measured fluid pressures, determining the actual flow rate of hydraulic fluid through the fluid valve; and
adjusting the fluid valve such that the actual flow rate equals the desired flow rate.

**14.** The method of claim 13, wherein the step of receiving a desired fluid flow rate comprises providing an input device to a user, and receiving a user-defined fluid flow rate via said input device.

**15.** A controller for an agricultural vehicle, the controller arranged to implement the steps as claimed in claim 13 or claim 14.

Fig. 1

Fig. 2

Europäisches
Patentamt

European
Patent Office

Office européen
des brevets

# EUROPEAN SEARCH REPORT

Application Number

EP 17 15 2847

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 286 412 B1 (MANRING NOAH D [US] ET AL) 11 September 2001 (2001-09-11) | 1-5,8-15 | INV.<br>F15B21/08<br>E02F9/22<br>A01B63/10<br>G05D7/00 |
| Y | * Column 1 lines 35-40,<br>column 2 lines 49-54,<br>column 3 lines 60-61,<br>column 4 lines 1-2, 14-25, 37-38, 42-48, 64-67,<br>column 5 lines 1-2, 13-15,<br>column 6 lines 16-28, 42-44;<br>Figures 1-2 * | 6,7 | |
| X | US 2003/121409 A1 (LUNZMAN STEPHEN V [US] ET AL) 3 July 2003 (2003-07-03)<br>* Paragraphs [0001]-[0002], [0014], [0017], [0020], [0024];<br>Figure 1 * | 1,5, 13-15 | |
| Y | US 6 061 617 A (BERGER ALAN DANIEL [US] ET AL) 9 May 2000 (2000-05-09)<br>* Column 1 lines 5-9,<br>column 6 lines 30-45, 58-67,<br>column 8 lines 55-68;<br>Figures 3-4 * | 6,7 | TECHNICAL FIELDS SEARCHED (IPC)<br><br>G01F<br>G05D<br>E02F<br>F15B<br>A01B |

The present search report has been drawn up for all claims

| Place of search | Date of completion of the search | Examiner |
|---|---|---|
| Munich | 20 July 2017 | Roch, Vincent |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.....................................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 17 15 2847

This annex lists the patent family members relating to the patent documents cited in the above-mentioned European search report.
The members are as contained in the European Patent Office EDP file on
The European Patent Office is in no way liable for these particulars which are merely given for the purpose of information.

20-07-2017

| Patent document cited in search report | | Publication date | Patent family member(s) | | Publication date |
|---|---|---|---|---|---|
| US 6286412 | B1 | 11-09-2001 | DE 10056157 A1 | | 13-06-2001 |
| | | | JP 2001193707 A | | 17-07-2001 |
| | | | US 6286412 B1 | | 11-09-2001 |
| US 2003121409 | A1 | 03-07-2003 | DE 10257411 A1 | | 10-07-2003 |
| | | | JP 2003239906 A | | 27-08-2003 |
| | | | US 2003121409 A1 | | 03-07-2003 |
| US 6061617 | A | 09-05-2000 | NONE | | |

EPO FORM P0459

For more details about this annex : see Official Journal of the European Patent Office, No. 12/82